# EUROPEAN PATENT APPLICATION

(11) **EP 2 863 146 A1**
(43) Date of publication of application: **22.04.2015**
(21) Application number: 13189410.7
(22) Date of filing: 18.10.2013
(51) Int. Cl.: F24J 2/20

(54) **Method for producing an absorber for a solar collector, and a solar collector**

(71) Applicant: Rodomach Speciaalmachines B.V., 7418 EJ Deventer (NL)
(72) Inventor: Doornebosch, Roelof, 7418 ES Deventer (NL); te Kamp, Bernard Teunis, 7418 ES Deventer (NL)
(74) Representative: van Essen, Peter Augustinus

(57) **Abstract**

The invention provides a method for producing an absorber for a solar collector, said solar heat absorber having a fluid inlet and a fluid outlet, said method comprising the steps of
- providing a first and a second substantially flat metal plate;
- laser welding said plates together at least along a perimeter of said plates, providing at least a peripheral weld, while pressing said plates together;
- placing said welded plates in a press that provides its pressure at the weld or welds;
- providing a fluid under a pressure to said absorber via at least one of said fluid inlet and said fluid outlet, wherein said fluid is applied at a pressure difference between said fluid inlet and said fluid outlet inflating said absorber while said press applies a pressure for holding the plates attached, expanding said welded metal plates for providing a permanent fluid channel between said plates and fluid-coupling said fluid inlet to said fluid outlet,

wherein before said fluid under pressure is applied:
- providing within said peripheral weld at least one through holes in one of the plates for providing said fluid inlet and at least one through hole in one of the plates for providing said fluid outlet;
- providing nipples at the through holes and attached to the metal plate, and
- applying said fluid under pressure to said absorber via said nipples.

## Description

### Field of the invention

The invention relates to a method for producing an absorber for a solar collector, and a solar collector provided with such a solar heat absorber.

### Background of the invention

Solar collectors as such are known in the art. Conventionally, conduits are provided in a serpentining manner and exposed to solar radiation. A fluid is led though the conduit in order to take up solar heat. These known assemblies are difficult to produce in mass production, and have a relatively low output.

In WO01/77590 and comparable EP1797373B1, a solar collector is disclosed that comprises a first substantially flat front plate for collecting solar energy, a second substantially flat back plate which is fixed at least substantially along the edges on the underside of the first plate, a space between the two plates, an inlet for feeding a liquid to the space, an outlet for discharging the liquid from the space, whereby the liquid can flow from the inlet to the outlet, wherein the space between the plates is formed in that a profile defining a substantially flat, zigzag form of the space is arranged in at least one of the plates. In EP1797373B1 said solar collector further comprising turbulence members for causing turbulence in the liquid in the space, which turbulence members partly close the through flow channel in vertical direction.

WO00/03185 describes a method for producing a solar collector and an absorber for said solar collector. According to the absorber production method, two absorber flat pieces are arranged side-by-side forming a bonded surface and an inlet and an outlet are inserted in the edge areas between the absorber flat parts. The absorber flat parts are attached to each other in order to obtain a fluid-tight connecting duct between the inlet and the outlet connecting piece. The connecting duct is then subjected to inner pressure so that the cross-sectional surface of the connecting duct is enlarged as a result of the pressure applied.

EP1191288 describes an absorber which has a top and bottom plate which are joined, and bearing elements formed by bulges in the top and or bottom absorber plates.

DE3340297 describes a process for forming an absorber, in which sheet-metal plates are expanded by means of a pressurised medium to form flow channels. These are filled after mounting with an anti-corrosion, frost-protected heat carrier liquid. In order to protect the absorber against corrosion during storage, a corrosion-inhibiting, frost-protected heat carrier liquid is used as the medium for expanding the interspaces.

JP58128236 describes a method in which to restrain deformation in a manufacturing method that makes linear welding two overlapped metallic plates by a laser beam, internal pressure is applied between the two metallic plates and flow passages are formed by swelling the parts between linearly welded parts, by applying internal pressure between rigid body separated from each other. After linear welding two overlapped metallic plates by a laser beam, the plates are inserted between a rigid body having faces separated from each other. After sealing the outlet, high pressure fluid is introduced from the inlet between the two metallic plates and the metallic plate between weld lines are bulged out to form passages of heat medium. At this time, the rigid body restrains excessive bulging to make passages desired size and shape

JP57117746 describes facilitating manufacturing of a solar-heat absorbing panel or a plate type heat exchanger and improving its corrosion resistance, by making common use of spot welding and seam welding to provide a resistance element for the bulging process. Two metal plates formed with openings are superposed on each other and they are joined together by applying seam welding at their peripheral portion. Further, they are welded together by applying spot welding or roll spot welding and seam welding alternately at the portions thereof which are not used as fluid passages. Then, bulging process is carried out by forcing a fluid from the openings under pressure. In the above arrangement, spot welding can be made in two rows between each two adjacent lines of seam welding.

Production of such a solar collector or absorber in mass production proved difficult.

### Summary of the invention

The invention aims to provide method for producing a solar collector that can be produced in mass production. The invention alternatively or in particular seeks to provide a method for producing a solar collector that can be produced in a reliable manner.

To that end, the invention provides a method according to claim 1, and a solar collector according to claim 15.

It was found that providing a leak-tight absorber for a solar collector was difficult, and that first attaching the mainly flat plates to one another before providing the channels resulted in a sure and reliable mass production process that allows high speed production of the absorbers for the solar panels. In particular, the production allows including an easy leak-test.

In this document, reference is made to peripheral. In some cases, also circumferential may be used when it is not limited to a circular shape, but is intended to refer to also include general shapes including rectangular.

In particular, using laser welding technique, a continuous lending seam or fillet can be created at the perimeter of the metal plates. Thus, a fluid-tight coupling of the metal plates can be provided. In an embodiment, the laser welding provides spots, in particular elongated spots, that connect or partially overlap. By providing a partial overlap, a fluid-tight welding seam can be assured.

The solar collector further can comprise a housing for the solar heat absorber. An embodiment of such a housing is in general disclosed in EP1797373B1, incorporated by reference as is fully set forth in this text.

In particular, in an absorber for a solar collector, the temperature cycles are very specific and place a high demand on the quality of welding and other provisions in order to prevent for instance leakage. In a solar collector, as soon as the sun shines bright, the temperature can easily rise up to almost 100 degrees Celsius in a short time, even within minutes. As soon as a cloud comes before the sun, or in winter rain or hail comes down, the temperature can drop within an hour to below zero degrees. Furthermore, during 24 hours the temperature can go through many cycles. Thus, the thermal stress load upon welds en fluid inlets is considerable.

The currently-proposed production method further allows a relatively stiff absorber to be produced. In fact, this again allows the thickness of the metal plates to be reduced. In fact, it is even considered to use for instance RVS plates with a thickness between 0.3 and 0.8 mm. This allows a swift and lossless heat transfer, less material use and a lighter construction.

In an embodiment, said nipples comprise at their faces directed in the direction of said hole a peripheral groove around said through hole, said peripheral grooves holding a sealing ring surrounding said through hole, and wherein said nipples are pressed onto said metal plate with the groove and are attached to said metal plate.

In an embodiment, the nipples comprise a flange, and said nipples are spot-welded on said metal plate via said flange.

In an embodiment, before said metal plates are welded together, at the location of said through hole in one metal plate a barrier layer is provided for preventing said metal plates from becoming attached when said nipples are applied on one of said metal plates.

In an embodiment, the method further comprises providing at least one through holes in one of the plates for providing said fluid inlet, and at least one through hole in one of the plates for providing said fluid outlet;

In an embodiment, the method comprising pressing said plates on top of one another along at least a perimeter of said plates.

In an embodiment, said press comprises a die having a pattern which has the shape of the weld and which extends 1-20 mm from the basic surface of the die, in an embodiment extending 1-5 mm from the basic surface.

In an embodiment, said press comprises a first die having the pattern the shape of the weld, and a second, opposite die that also has the shape of the weld such that when pressing the welded metal plates, both patterns press the weld between them.

In an embodiment, said welding of said metal plates includes proving spot welds in said fluid channel for welding together the metal plates in said fluid channel for providing flow turbulence means between the inlet and the outlet.

In an embodiment, said weld comprises a peripheral weld enclosing at least the inlet and the outlet, and providing one or more welds that provide boundaries of one or more zigzag fluid channels fluid coupling said inlet and said outlet, in an embodiment providing in an alternating manner first and second welds with first welds that run from the peripheral weld at one first end of the absorber end and that end before the peripheral weld at an opposite second end of the absorber and second welds that run from the peripheral weld at the opposite, second end and that end before the peripheral weld at the first end of the solar heat absorber.

In an embodiment, spot welds are welded within a circumference of said peripheral weld.

In an embodiment, said peripheral weld is provided to enclose at least the fluid inlet and the fluid outlet, and one or more welds are provided that provide boundaries of one or more fluid channels between said fluid inlet and said fluid outlet, in particular said welds are provided to provide a fluid channel spiralling from a side of the absorber to a centre of the absorber.

In an embodiment, before the plates are placed on top of one another, weld-preventing layers are provided between the metal plates at the positions of said fluid inlet and said fluid outlet.

In an embodiment, at the location of an inlet or an outlet, one of the metal plates of the absorber is provided with a through hole.

In an embodiment, before the metal plates are expanded, nipples provided with a flange are provided at the through holes and welded to the metal plate with said flange around said through holes before said fluid under pressure is provided to said absorber.

In an embodiment, before the metal plates are expanded, nipples are provided at the through holes and attached to the metal plate and around said through holes before said fluid under pressure is provided to said absorber without attaching together said metal plates at or near the locations of said through holes.

The invention further relates to a solar collector comprising a solar heat absorber produced using the method described in this application.

The invention further pertains to a solar collector comprising a solar heat absorber comprising a first and second metal plate welded together on top of one another at their perimeter via a continuous, peripheral weld, a fluid inlet and a fluid outlet within the peripheral weld , at least one continuous weld extending between said fluid inlet and said fluid outlet, and a plurality of spot welds within the peripheral weld.

In the current absorber, the welding is done via laser welding. In this process, subsequent spots are welded. An alternative welding technology that might be considered for producing the continuous, leak-tight welds would be seam welding, which is a contact-based welding technique that would require a lot of manipulation of the plates during welding. Laser welding, in contrast, is contactless and does not require the plates to be manipulated during welding.

The laser welds are produced using a fibre laser with a very high yield of 25-30%. The type of weld that is produced is a deep weld. This means that the melting zone of the weld during welding can extend up to 80 % of the lower plate.

The turbulence members can have a spot diameter of 3-15 mm. In most applications, the turbulence members have an substantially circular spot with a diameter of between 4 and 10 mm.

The invention further relates to a method for producing an absorber for a solar collector, said solar heat absorber having a fluid inlet and a fluid outlet, said method comprising the steps of
- providing a first and a second substantially flat metal plate;
- laser welding said plates together at least along a perimeter of said plates, providing at least a peripheral weld, while pressing said plates together;
- placing said welded plates in a press that provides its pressure at the weld or welds and said press applying a pressure of at least 200 tons per m² of absorber;
- providing a fluid under a pressure to said absorber via at least one of said fluid inlet and said fluid outlet, wherein said fluid is applied at a pressure difference between said fluid inlet and said fluid outlet inflating said absorber, wherein said pressure difference is at least 20 bar, expanding said welded metal plates for providing a permanent fluid channel between said plates and fluid-coupling said fluid inlet to said fluid outlet.

Further embodiments described in this description can be combined with this method.

The invention further relates to a solar collector comprising a solar heat absorber comprising a first and second metal plate welded together on top of one another at their perimeter via a continuous, peripheral weld, a fluid inlet and a fluid outlet within the peripheral weld, at least one continuous weld extending between said fluid inlet and said fluid outlet, and a plurality of spot welds within the peripheral weld.

Further embodiments described in this description can be combined with this solar collector.

The terms "upstream" and "downstream" relate to an arrangement of items or features relative to the flow of a (heat absorbing) fluid from a tank and through the solar collector.

The term "substantially" herein, such as in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%.

The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which is shown in:
Figures 1-7 various steps in a method for producing an absorber for a solar collector;
Figure 8 a transport band for transporting absorbers;
Figures 9-10 a nipple for an inlet and/or an outlet of an absorber for a solar collector;
Figures 11-13 some embodiments of the fluid channels of the solar-heat absorber, and
Figures 14-15 an alternative embodiment of the nipple for an inlet and/or an outlet of an absorber for a solar collector of figures 9-10.

The drawings are not necessarily on scale.

### Description of preferred embodiments

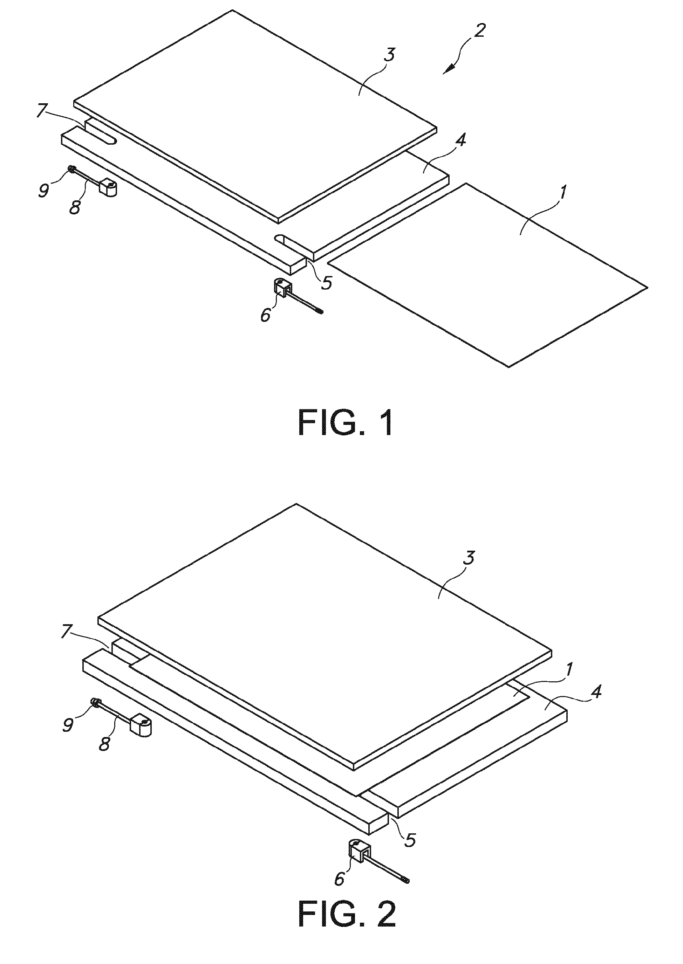

In figures 1-7, various steps in a method for producing an absorber for a solar collector. In the step of figure 1, two metal plates 1 are already welded together at least along their perimeter, to form a pre-shape for an absorber. Furthermore, an inlet and an outlet have already been provided on the surface opposite of the surface that is visible. In figure 1, a press 2 with two dies 3, 4 that are currently spaced apart are ready to receive the welded metal plates 1. The lower die 4 is provide with two slots 5, 7 that can allow the inlet and outlet of the of the absorber to remain available. Two adapters 6, 8 are provided that can attach to the inlet and outlet of the absorber. In this embodiment, adapter 6 is attached to a source of fluid under pressure, and adapter 8 is here provided with a stop 9.

In figure 2, the two welded plates 1 that will become the absorber are placed into the press and with the inlet and outlet, that are provided in the lower of the two plates 1 that will make up the absorber, in the slots 5 and 7.

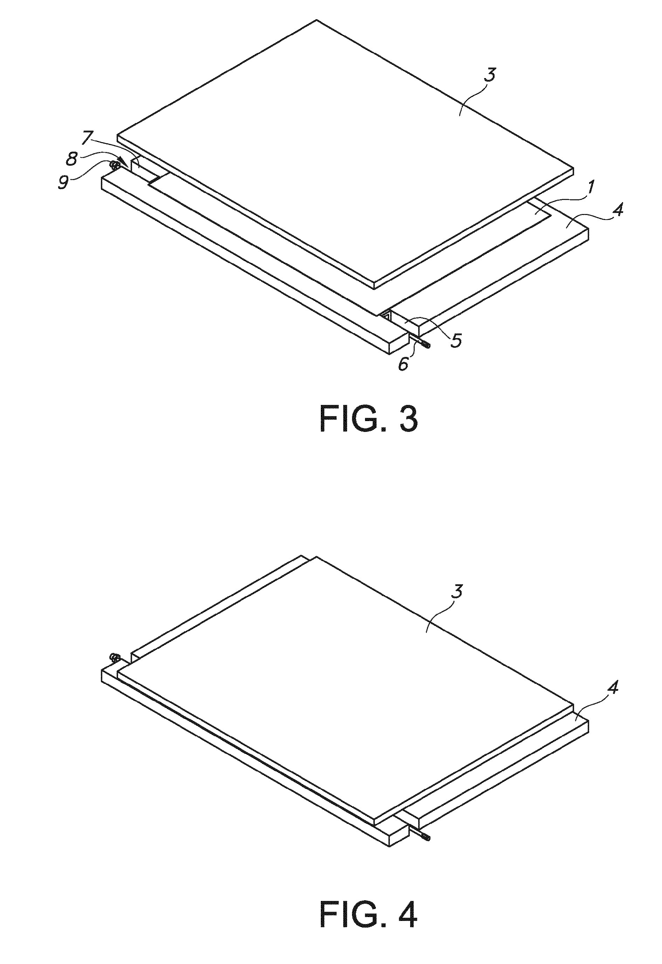

In figure 3, the two welded plates 1 rest on the lower die 4 and the adapters 6 and 8 are coupled to the inlet and the outlet via slots 5 and 7.

In figure 4, the upper die 3 is now lowered onto the two welded plates. The dies 3, 4 are now pressed together. As soon as the required pressure is attained, a fluid pressure is applied via adapter 6. In an alternative, it is also possible to apply pressure via both adapters 6, 8. Here, water is applied at a pressure of about 20-60 bar, depending on the thickness of the metal plates. In an example, metal plates of stainless steel with a thickness of 0.2-1.0 mm are used, and a pressure of 30-50 bar is applied. In particular, metal plates with a thickness of 0.3-0.8 are used. The pressure is sufficient to deform the plates and to provide for instance a serpentining fluid channel running from the inlet to the outlet. The press 2 defines the height of the fluid channel and prevents rupture of the welds. This will be explained below.

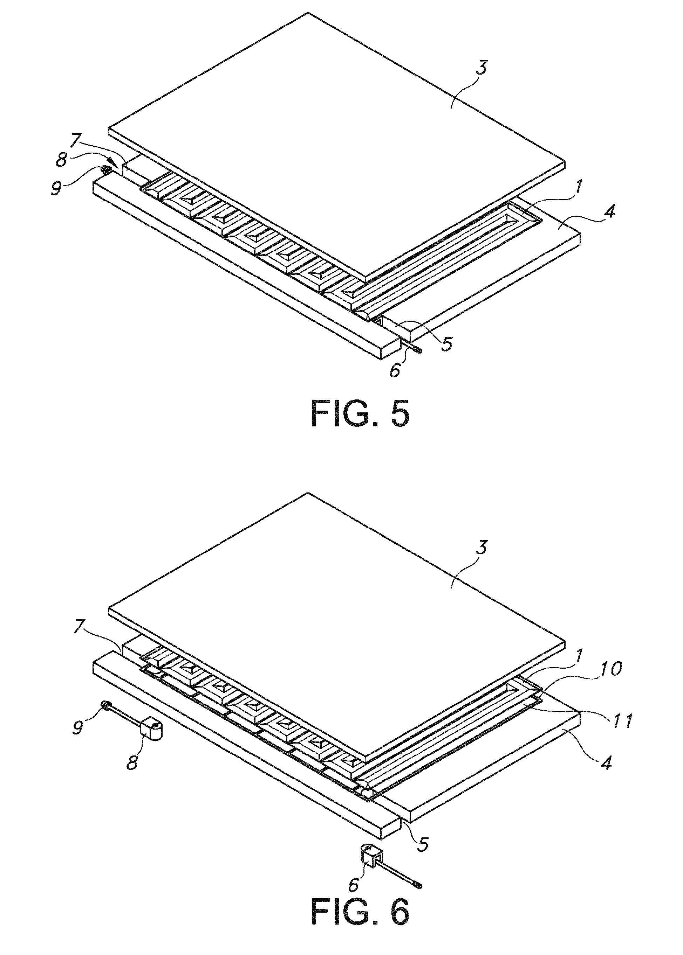

In figure 5, the press 2 is opened and the absorber with serpentining or zigzag fluid channel can be seen. This shows the peripheral weld and transverse welds that extend from the peripheral weld and that extend almost to the opposite side. Alternatingly, a transverse weld starts from one side and from the opposite side.

In figure 6, the press is opened and the adapters 6, 8 are uncoupled from the inlet and the outlet. In this drawing, on the lower die 4 a provision can be seen that controls the expanding of the absorber: The die has the pattern of the welded parts extending 2-10 mm from the further surface 11 of the die. In the current embodiment, the upper die 3 has the same pattern in mirror image. In this way, when the dies are pressed together with an unexpanded absorber pressed between then, at first pressure is exerted on the welded parts. The remaining parts of the yet unexpanded absorber has room to expand. If the fluid is now introduced, it usually has a pressure that is sufficient to blow up the yet unexpanded absorber, but it is less than the pressure per unit surface area of the press. In this way, the force exerted by the fluid that is used to blow up the absorber is not applied to the welds. Furthermore, the remaining surface 11 of a die between the extending weld-pattern 11 determines the shape of the expanding of the absorber. Thus, the remaining surface 11 can be flat, or it can have a profile that can be transferred onto the absorber 1 when it is being expanded. Thus, for instance the pattern of figures 5-8 can be produced on the absorbers.

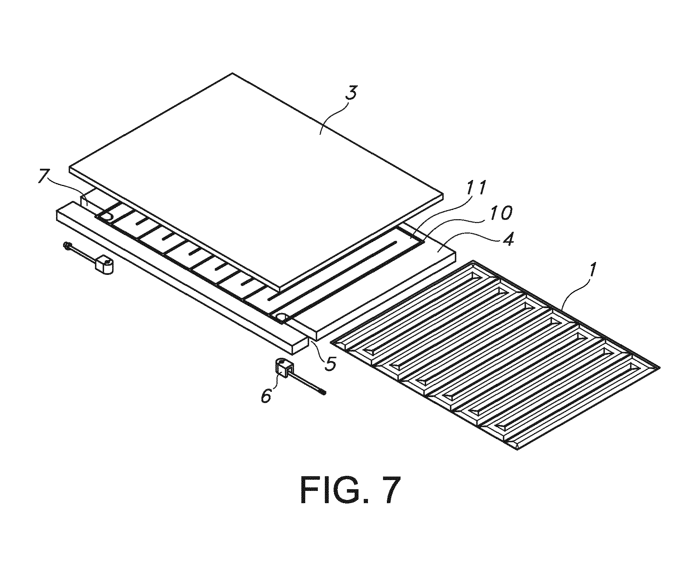

In figure 7, the expanded absorber 1 is removed from the press 2 for a next production step. A next production step may comprise provided a solar radiation absorption layer. Usually, the metal surface is coated using a paint, often matt black, that absorbs as much as possible of the solar radiation. This may also includes absorbing infrared radiation and/or Ultraviolet radiation.

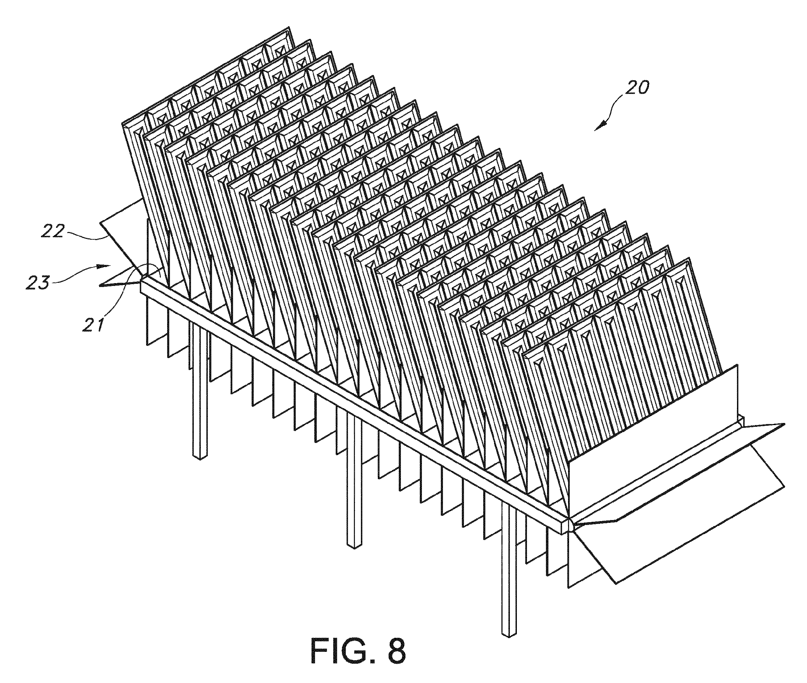

In figure 8, a transport device 20 is shown that has a transport band 21 that is adapted for transportation of expanded and coated absorbers. The transport band 20 has supporting provisions 22 for supporting absorbers. These supporting provisions are here plates 22 that are interspaced and extend from the transport band 21. At the turns of the band 21, in this way a nip 23 is created that receives an absorber coming in with an horizontal orientation. At the end of the transport device 20, an absorber will be transferred in a horizontal position again. The transport device will be used as a delay/storage step after the absorbers are coated, and may provide a delay/storage during drying of a coating layer.

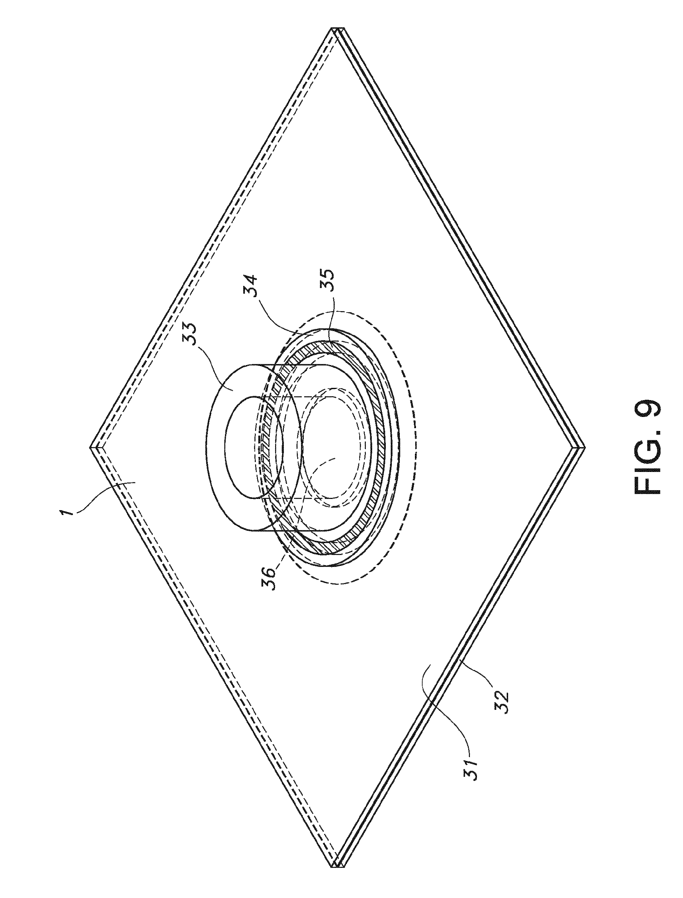

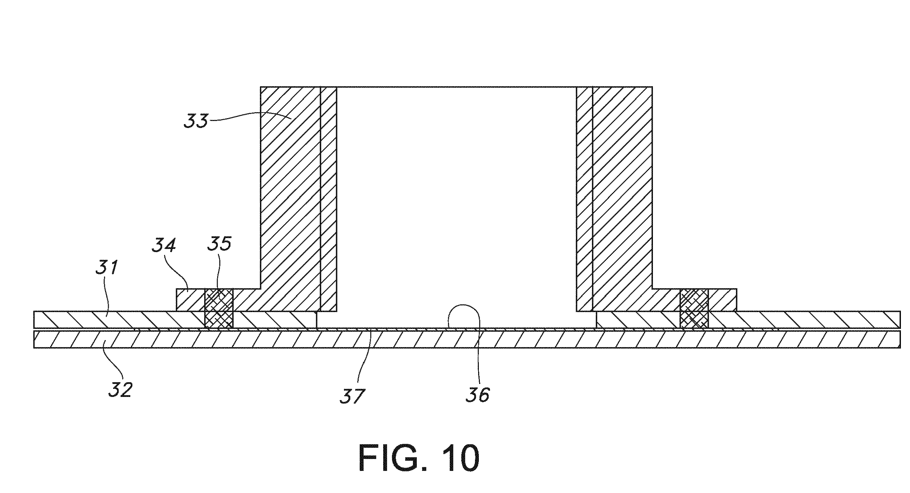

In figures 9 and 10, details of an embodiment of the inlet and/or outlet are shown. The absorber 1 has an upper metal plate 31 and a lower metal plate 32. For clarity, in figures 1-7, the upper metal plate 31 actually was the lower metal plate that was not visible. The upper metal plate 31 is provided with a through hole 36. Over the through hole 36, a nipple is provided that allows attachment of the adapters discussed earlier for expanding the absorber. The nipple also allows attachment of conduits for providing or removing fluid to or from the absorber. To that end, the nipple can be provided with attachment provisions. Examples of such provisions comprise internal thread, external thread, or external snap-fit provisions. The nipple 33 in this embodiment further comprises a flange 34 for attaching the nipple 33 to the upper metal plate 31. To that end, in this embodiment it is provided with a peripheral weld or solder zone 35. Alternatively, if the nipple is soldered, no flange may be needed.

In figure 10, a cross section of the inlet/outlet is shown, showing a particular attachment provision that is used for attaching the nipple 33 to the upper metal plate 31. At the location of through hole 36, a layer 37 is provided that prevents the upper metal plate 31 and the lower metal plate 32 to become attached to one another when the flange 34 of nipple 33 is welded or soldered to the upper metal plate 31 via zone 35. In production, first the upper metal plate 31 is provided with through hole 36. Next, at the locations of the through holes in the upper plate 31, the lower metal plate 32 is provided with the attachment-preventing layer 37. Next, the upper metal plate 31 is placed on top of the lower metal plate 32. Next, it can be selected to first weld the metal plates 31 and 32 onto one another and then weld or solder the nipple 33, or to first weld or solder the nipple 33 and then weld the metal plate onto one another.

The layer 37 can be a stick-preventing layer known in the art. For instance, a carbon layer can be used, or alternatively a coating of film that prevents the plates 31 and 32 to be welded together at the inlet and outlet.

In an embodiment, instead of the serpentining fluid channel, other layouts may be considered. In particular, it was found that an inward-spiralling channel having its inlet at or near the rim and its outlet at or near the centre has advantages. In such an embodiment, the rim or edge of the absorber stay relatively cool. When mounting the absorber with placement holders at the rim, it is evident that simple polymer holders will suffice. In the inward-spiralling channel layout, in an embodiment the fluid to be used for heat transfer is glycol.

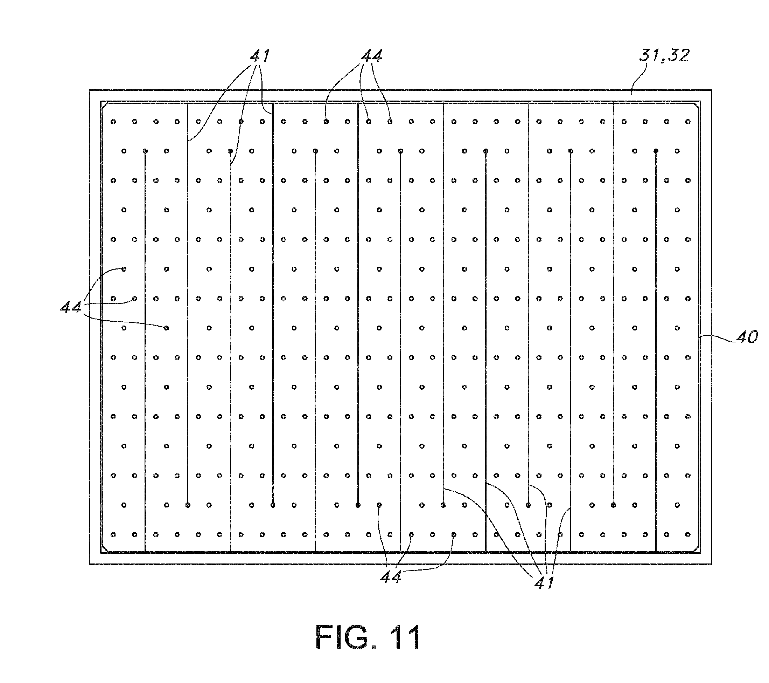

Before entering the steps illustrated above, the metal plates 31 and 32 are placed on top of one another and welded together. It was found that laser welding provides an excellent technique to make a fluid-tight weld and with a quality to last many temperature cycles during the lifetime of the absorber. In fact, in an embodiment, continuous welds are produced using spots that at least partially overlap. It was found that using elongated spots that partially overlap, a fluid-tight weld could be produced. For the solar heat absorber, a continuous, peripheral weld was made near the circumference of the metal plates 31 and 32. This weld encloses both the inlet and outlet. Furthermore, one or more welds are provided that define (after the absorber is expanded) one or more fluid channels. The fluid channel of channels connect the inlet(s) and outlet(s). In figures 11-13, some layouts of the welds and positioning of inlet and outlet are shown.

In figure 11, the fluid channel has a zigzag layout that was already discussed above. The metal plates 31, 32 are placed on top of one another and pressed together. Next, the metal plates 31, 32 are welded together at several points. A peripheral weld 40 is provided which encloses an inlet and outlet opening. The peripheral weld 40 is made close to the rim. The peripheral weld in fact defines the circumference of the solar heat absorber. It may also be referred to as a circumferential weld.

Furthermore, continuous welding lines 41 are provided that define the sides of the fluid channel. In this embodiment, a single fluid channel runs from the left upper corner, serpentines and ends in the right lower corner of the solar heat absorber. To that end, alternately one welding line 41 starts from the peripheral weld 40 and runs from one starting side towards an opposite side, ending at a distance from the peripheral weld 40, and a next welding line 41 starts from the peripheral weld 40 at the opposite side and runs from the opposite side towards the starting side, ending at a distance from the peripheral weld 40 at the starting side.

Spaced away from the fluid channel-defining welding lines 41, spot welds 44 are provided. After expansion of the fluid channel, the metal plates 31, 32 will remain attached to one another, at those spot welds 44. In this way, in the fluid channel obstructions are created that have several functions. First, they provide turbulence members, for assuring that a better heat transfer between the metal plates 31, 32 and the fluid running in the fluid channel. Furthermore, these spot welds 44 provide additional rigidity to the solar heat absorber. The cross section of the spots can in an embodiment be between 5-15mm. Usually these spot welds 44 are circular.

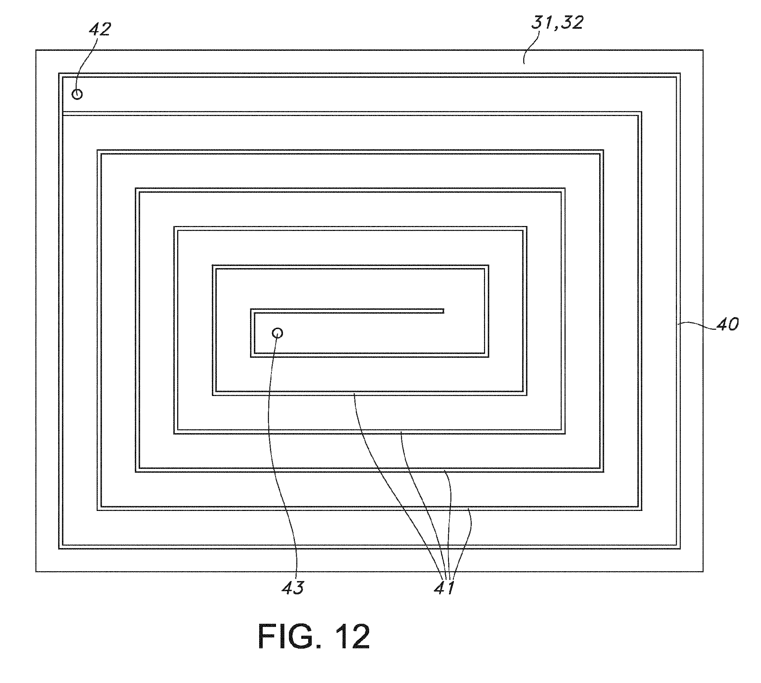

In figure 12, the fluid channel has a spiral shape. In this embodiment, again the peripheral weld 40 is provided, and an inlet 42 and an outlet 43 for fluid. Furthermore, an inwards-spiralling continuous weld 41 is provided for defining the fluid channel. In this channel layout, the circumference of the solar heat absorber remains relatively cool, and the centre will be heated. In this way, the solar heat absorber van he clamped along the edge or rim of the solar heat absorber which puts less constraints on a clamping system for holding the solar heat absorber fixed to a building.

In the embodiment of the inward spiralling fluid channel, one single, continuous, spiralling weld 41 would be sufficient. Again, the width of such a weld at the interface between the upper and lower plate would be between 0.3 - 0.8 mm, depending on the thickness of the upper and lower plate. In this drawing, the spot welds 44 in the fluid channel as indicated in figure 11 are not shown, but can also be present and provide the advantages already discussed.

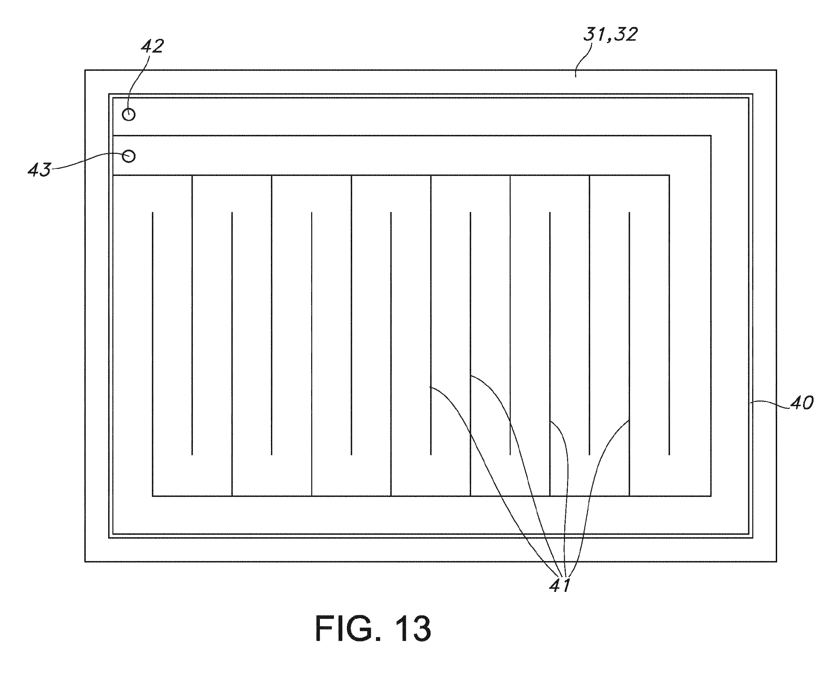

In figure 13, the solar heat absorber has a fluid channel which has a substantially zigzag layout but laid out in such a way that fluid inlet 42 and fluid outlet 43 are provided near the same corner of the solar heat absorber. This makes installation easier.

The solar heat absorber again has a continuous, peripheral weld 40. When providing the peripheral weld 40 a little remote from the edge as indicated in this drawing, although not on scale, after expanding the fluid channel a rim is created which functions as an attachment rim for fixing the solar heat absorber in a housing.

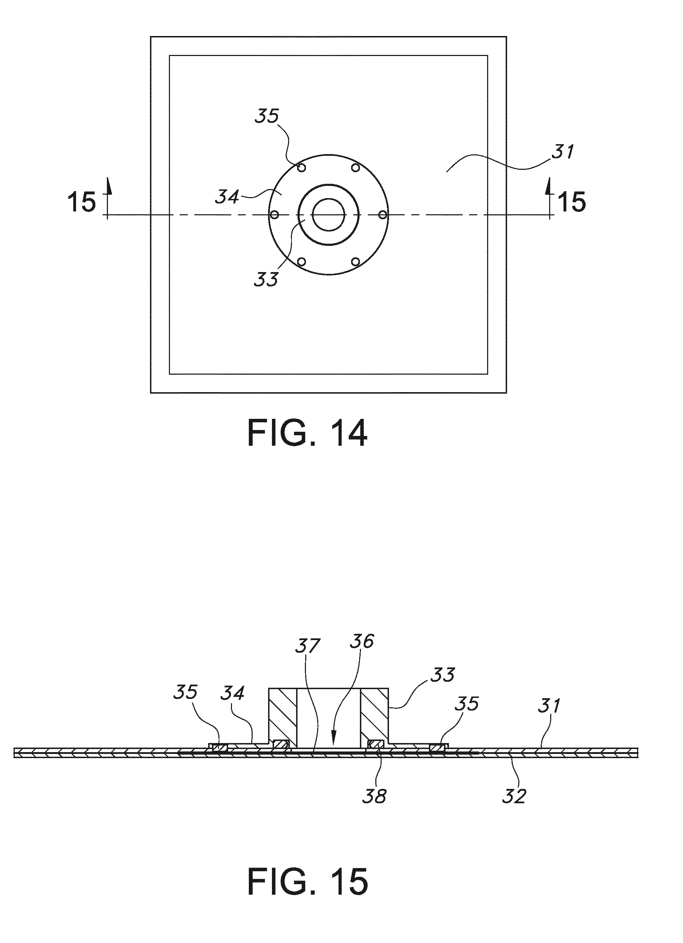

In figures 14 and 15, an alternative embodiment for the nipple 33 is shown. In this embodiment, the nipple 33 has a flange 34. In the nipple 33, a peripheral groove is provided. The peripheral groove is provided in the face which is directed towards the flat metal plate 31. In the peripheral groove, a sealing ring 38 is provided. At least part of the flange extends around the sealing ring 38. Thus, a surface is provided with which the nipple can be attached to the metal plate. In an embodiment, shown, the nipple 33 is pressed with its sealing ring 38 onto the metal plate 31. Thus, sealing ring 38 seals around through hole 36. In an embodiment, using several spot welds 35, the flange is attached to the metal plate 31. This increases production speed. Furthermore, a more secure sealing is provided. The sealing ring may be rubber, a synthetic material, or even a metal, providing a fluid-tight sealing when pressed on a metal plate.

It is to be understood that the above description is included to illustrate the operation of the preferred embodiments and is not meant to limit the scope of the invention. The scope of the invention is to be limited only by the following claims. From the above discussion, many variations will be apparent to one skilled in the art that would yet be encompassed by the spirit and scope of the present invention.

## Claims

1. A method for producing an absorber (1) for a solar collector, said solar heat absorber having a fluid inlet and a fluid outlet (42, 43), said method comprising the steps of
- providing a first and a second substantially flat metal plate (31, 32);
- laser welding said plates together at least along a perimeter of said plates, providing at least a peripheral weld (40), while pressing said plates together;
- placing said welded plates in a press that provides its pressure at the weld or welds;
- providing a fluid under a pressure to said absorber via at least one of said fluid inlet and said fluid outlet, wherein said fluid is applied at a pressure difference between said fluid inlet and said fluid outlet inflating said absorber while said press applies a pressure for holding the plates attached, expanding said welded metal plates for providing a permanent fluid channel between said plates and fluid-coupling said fluid inlet to said fluid outlet,
wherein before said fluid under pressure is applied:
- providing within said peripheral weld at least one through holes (36) in one of the plates for providing said fluid inlet and at least one through hole in one of the plates for providing said fluid outlet;
- providing nipples (33) at the through holes (36) and attached to the metal plate, and
- applying said fluid under pressure to said absorber via said nipples (33).

2. The method of claim 1, wherein said nipples (33) comprise at their faces directed in the direction of said hole a peripheral groove around said through hole (36), said peripheral grooves holding a sealing ring (38) surrounding said through hole, and wherein said nipples are pressed onto said metal plate (31) with the groove and are attached to said metal plate (31).

3. The method of claim 1 or 2, wherein said nipples comprise a flange (34), and said nipples are spot-welded (35) on said metal plate (31) via said flange (34).

4. The method of any one of claims 1-3, wherein before said metal plates (31, 32) are welded together, at the location of said through hole (36) in one metal plate (31) a barrier layer (37) is provided for preventing said metal plates (31, 32) from becoming attached when said nipples (33) are applied on one of said metal plates.

5. The method of any one of the preceding claims, comprising pressing said plates on top of one another along at least a perimeter of said plates;

6. The method of any one of the preceding claims, wherein said press comprises a die having a pattern which has the shape of the weld and which extends 1-20 mm from the basic surface of the die, in an embodiment extending 1-5 mm from the basic surface.

7. The method of claim 4, wherein said press comprises a first die having the pattern the shape of the weld, and a second, opposite die that also has the shape of the weld such that when pressing the welded metal plates, both patterns press the weld between them.

8. The method of any one of the preceding claims, wherein said welding of said metal plates includes proving spot welds in said fluid channel for welding together the metal plates in said fluid channel for providing flow turbulence means between the inlet and the outlet.

9. The method of any one of the preceding claims, wherein said weld comprises a peripheral weld enclosing at least the inlet and the outlet, and providing one or more welds that provide boundaries of one or more zigzag fluid channels fluid coupling said inlet and said outlet, in an embodiment providing in an alternating manner first and second welds with first welds that run from the peripheral weld at one first end of the absorber end and that end before the peripheral weld at an opposite second end of the absorber and second welds that run from the peripheral weld at the opposite, second end and that end before the peripheral weld at the first end of the solar heat absorber.

10. The method of any one of the preceding claims, wherein before the plates are placed on top of one another, weld-preventing layers are provided between the metal plates at the positions of said fluid inlet and said fluid outlet.

11. The method of any one of the preceding claims, wherein at the location of an inlet or an outlet, one of the metal plates of the absorber is provided with a through hole.

12. The method of any one of the preceding claims, wherein before the metal plates are expanded, nipples provided with a flange are provided at the through holes and welded to the metal plate with said flange around said through holes before said fluid under pressure is provided to said absorber.

13. The method of any one of the preceding claims, wherein before the metal plates are expanded, nipples are provided at the through holes and attached to the metal plate and around said through holes before said fluid under pressure is provided to said absorber without attaching together said metal plates at or near the locations of said through holes, in particular said method further comprising a step of coating the solar collectors after welding, and transporting the coated solar collectors after coating using a transport system having a buffer size large enough to retain the coated solar collectors long enough for the coating to dry.

14. A solar collector comprising a solar heat absorber produced using the method of any one of the preceding claims.

15. A solar collector comprising a solar heat absorber comprising a first and second metal plate welded together on top of one another at their perimeter via a continuous, peripheral weld, a fluid inlet and a fluid outlet within the peripheral weld, said fluid inlet and said fluid inlet comprising a nipple comprising a flange and a peripheral groove holding a sealing ring surrounding a through hole in one of said metal plates, said attached to that said metal plate via its flange.
